# EUROPÄISCHE PATENTSCHRIFT

(11) **EP 2 776 140 B1**
(45) Veröffentlichungstag und Bekanntmachung des Hinweises auf die Patenterteilung: **12.09.2018**
(21) Anmeldenummer: 12786945.1
(22) Anmeldetag: 08.11.2012
(51) Int. Cl.: B01D 39/16, B01D 39/18, B01D 46/52, F02M 35/08

(54) **FILTERMATERIAL UND FILTERELEMENT**
FILTER MATERIAL AND FILTER ELEMENT
MATERIAU FILTRANT ET ELEMENT FILTRANT

(30) Priorität: 10.11.2011 DE 102011086104
(43) Veröffentlichungstag der Anmeldung: 17.09.2014
(73) Patentinhaber: Mahle International GmbH, 70376 Stuttgart (DE)
(72) Erfinder: DISSON, Ralf, 71397 Leutenbach (DE); NEUBAUER, Bernd, 73635 Rudersberg (DE); RENZ, Birgit, 71672 Marbach (DE); STEPPE, Markus, 71272 Malmsheim (DE)
(74) Vertreter: BRP Renaud & Partner mbB Rechtsanwälte Patentanwälte Steuerberater
(86) Internationale Anmeldenummer: PCT/EP2012/072081
(87) Internationale Veröffentlichungsnummer: WO 2013/068436

(56) Entgegenhaltungen:
- EP-A1- 1 366 791
- US-A- 4 702 940
- US-A1- 2003 150 199
- US-A1- 2009 071 113

## Beschreibung

Die vorliegende Erfindung betrifft ein Filtermaterial, insbesondere für einen Luftfilter, gemäß dem Oberbegriff des Anspruchs 1.

Aus der WO 2011/110637 A2 ist ein gattungsgemäßes Filtermedium eines Filterelements zur Filtrierung eines Fluides, insbesondere eines flüssigen Kraftstoffs, Wasser, Motoröl oder Luft, bekannt, das wenigstens eine nicht gewebte Filterlage aus synthetischen Einzelfasern umfasst. Das Filtermedium hat einen in Durchströmungsrichtung zunehmenden Abscheidegrad für die auszufilternden Partikel. Die Filterlage weist zudem eine in Durchströmungsrichtung zunehmende Komprimiertheit auf.

Aus der DE 299 07 699 U1 ist ein Filtermaterial, umfassend mindestens eine Trägermateriallage und mindestens eine Faservlieslage, bekannt. Die mindestens eine Faservlieslage weist dabei eine Nanofaservlieslage mit einem durchschnittlichen Faserdurchmesser von 10 bis 1000 Nanometer und weiteren nanofaserspezifischen Parametern auf. Die Trägermateriallage ist dabei aus einem Filterpapier aufgebaut.

Aus der DE 197 31 860 C1 ist wiederum ein mehrschichtig aufgebautes Filtermaterial bekannt, mit einer Faserschicht, die mit einer Papierträgerschicht zusammen laminiert ist. Auch aus der EP 1 366 791 ist ein solches Filtermaterial bekannt, wobei die Trägerschicht mit einem Harz imprägniert ist.

Die vorliegende Erfindung beschäftigt sich mit dem Problem, für ein Filtermaterial der gattungsgemäßen Art eine verbesserte oder zumindest eine alternative Ausführungsform anzugeben, die sich insbesondere durch eine hohe Rußaufnahmekapazität sowie einen hohen Abscheidegrad auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Filtermaterial in Durchströmungsrichtung eine degressive Porengröße vorzusehen, was dadurch realisiert wird, dass eine anströmseitige Trägerschicht des Filtermaterials sowie eine abströmseitige Feinfaserschicht über einen dazwischenliegenden Verbindungsbereich miteinander verbunden sind. Zusätzlich ist auf der Anströmseite der Trägerschicht eine Imprägnierung aufgebracht. Die anströmseitig angeordnete Trägerschicht ist als offene Zelluloseschicht ausgebildet. Hierbei ist die Trägerschicht im Verhältnis zum gesamten Filtermaterial dick ausgeführt. Die Dicke der Trägerschicht besitzt einen Anteil von größer 75%, vorzugsweise größer 80% der Dicke des Gesamtverbunds. Die Dicke der Trägerschicht beträgt ca. 0,3 mm bis 1,0 mm, vorzugsweise ca. 0,60 mm bis 0,65 mm. Die Dicke der Trägerschicht wird bei 0,5kPa Messdruck ermittelt. Hierbei ist eine noch nicht weiter bearbeitete Trägerschicht betrachtet. Die Dicke der Trägerschicht kann sich bei diversen Bearbeitungsschritten, z.B. durch Aufwickeln, Falten, oder Kalibrieren, verringern. Weiterhin verfügt die Trägerschicht über viele offene Poren. Somit bietet die Trägerschicht durch die offenen Poren und die große Trägerschichtdicke eine hohe Rußaufnahmekapazität. Abströmseitig der Trägerschicht ist eine Feinfaserschicht aufgebracht. Die Feinfaserschicht nämlich, die beispielsweise als sogenannte Meltblown-Lage ausgebildet sein kann, weist einen hohen Abscheidegrad bei jedoch lediglich geringer Rußaufnahmekapazität auf. Hierbei verfügt die Feinfaserschicht über eine geringe Dicke von max. 25%, insbesondere 20%, Anteil der Dicke am Gesamtverbund. Bei vorteilhaften Ausgestaltungen kann die Dicke der Feinfaserschicht ca. 0,15 mm bis 0,23 mm, vorzugsweise ca. 0,19 mm betragen. Die Dicke der Feinfaserschicht wird ebenfalls bei 0,5kPa Messdruck ermittelt. Hierbei ist eine noch nicht weiter bearbeitete Feinfaserschicht betrachtet. Die Dicke der Feinfaserschicht kann sich bei diversen Bearbeitungsschritten, z.B. durch Aufwickeln, Falten, oder Kalibrieren, verringern. Insbesondere ist es möglich, dass sich die Feinfaserschicht bei nachfolgenden Bearbeitungsschritten oder Arbeitsabläufen um einen erheblichen Anteil u.U. mehr als 50%, komprimiert. Diese Komprimierung kann, insbesondere unter Wärmeeinwirkung, reversibel oder irreversibel sein. Mit den beiden über den Verbindungsbereich miteinander verbundenen, insbesondere miteinander verklebten, verschweißten oder aufgewalzten, Schichten, nämlich der Trägerschicht einerseits und der Feinfaserschicht andererseits, können die jeweiligen Vorteile der beiden Schichten, nämlich die hohe Rußaufnahmekapazität der Trägerschicht mit dem zugleich hohen Abscheidegrad der Feinfaserschicht kombiniert und dadurch ein Filtermaterial geschaffen werden, das gleichmäßig über die gesamte Tiefe beladen wird. Durch die gleichmäßige Beladung des Filtermaterials soll insbesondere verhindert werden, dass die Schmutzaufnahmekapazität der einen Filterlage vor der anderen erschöpft ist. Generell ist dabei anzumerken, dass die in diesem Absatz erstmalig und nachfolgend weiter genannte Rußaufnahmekapazität generell stellvertretend für die Aufnahmekapazität für herauszufilternde Partikel steht. Die gleichmäßige Beladung bei gleichzeitig äußerst hoher Filterkapazität wird auch durch die sich in Durchströmungsrichtung verengende Porengröße sichergestellt. Auch die vorgegebene Dicke von zumindest 0,35 mm, vorzugsweise 0,5 - 1,0 mm, sichert die langfristig hohe Filterleistung des erfindungsgemäßen Filtermaterials. Verwendung findet ein derartiges Filtermaterial beispielsweise in plissierten Filterelementen, welche ringförmig geschlossen oder flach ausgeführt sind, aber auch in gewickelten Einsätzen mit wechselseitig verschlossenen Kanälen, insbesondere zur Reinigung der Ansaugluft einer Brennkraftmaschine. Die Trägerschicht, welche zudem schwer entflammbar ist, weist die erfindungsgemäße Imprägnierung auf. Ein Zellulosematerial für eine derartige Trägerschicht besteht zu 22 Massen-% aus einem Harz, das zur Festigkeit, Steifigkeit, Formstabilität (insbesondere von eingeprägten Abstandshaltern/Nocken) sowie zum Schutz vor äußeren Einflussfaktoren (Feuchtigkeit, Nässe, Chemikalien wie Öl, Kraftstoff) beiträgt. Durch die erfindungsgemäße auf der Anströmseite der Trägerschicht aufgebrachte einseitige Imprägnierung kann ein Zuschmieren von sehr feinen Poren (auf der Abströmseite) und ein Schließen bzw. sich Verkleinern feiner Poren durch eine Zwickelbildung des Harzes reduziert werden, so dass die Porenstruktur durch das Harz auf der Reinseite, das heißt der Abströmseite der Trägerschicht gar nicht und auf der Anströmseite, das heißt auf der Rohseite nur marginal verändert wird. Auch der im Vergleich zu üblichen Harzgehalten (25-27 Masen-%) reduzierte Harzgehalt in der Trägerschicht kann ein Zuschmieren von sehr feinen Poren, die insbesondere auf der Abströmseite eines Zellulosepapiers liegen, reduzieren.

Die Imprägnierung trägt in erheblichem Maße zu einer erfindungsgemäßen vorteilhaften degressiven Verteilung der Poren in Durchströmungsrichtung unter Vermeidung von sprunghaften Porengrößenveränderungen bei. Darüber hinaus wird sowohl die Abscheideleistung als auch die Schmutzspeicherkapazität (insbesondere für die Beaufschlagung mit Rußpartikeln, die aufgrund ihrer Feinheit besonders tief in das Filtermaterial eindringen, gesteigert.

Die Imprägnierung kann als eine unter Wärmeeinwirkung eine Vernetzung ausbildende härtbare Imprägnierung oder als nicht härtbare Imprägnierung ausgebildet sein. Des Weiteren kann sie Phenolharze, Acrylate oder Epoxidharze aufweisen. Bei einer vorteilhaften Weiterbildung der erfindungsgemäßen Lösung, weisen die Poren der Trägerschicht einen Porendurchmesser zwischen 65 und 85 µm, insbesondere einen Porendurchmesser von ca. 74 µm, auf. Vorzugsweise liegen dabei 40 bis 80 % der Poren im Bereich eines Porendurchmessers von ca. 65 bis 85 µm, wodurch eine vergleichsweise offenporige Trägerschicht mit einer hohen Luftdurchlässigkeit und einer hohen Rußaufnahmekapazität erreicht werden kann. Als Werkstoff für die Trägerschicht kommt beispielsweise Zellulose mit oder ohne Kunst-Faseranteil in Frage. Durch den Zusatz von polymeren Kunstfasern kann die Zelluloseschicht beispielsweise schweißbar ausgestaltet werden. Ein Zusatz aus Glasfasern in der Zellulose bewirkt eine höhere Kapazität des Filtermediums, da die Porosität größer gewählt werden kann.

Die erfindungsgemäße Imprägnierung kann nicht nur den Flammschutz verbessern, sondern auch die Materialstabilität positiv beeinflussen. Somit erhalten eingeprägte Strukturen, wie z.B. Rillen oder Nocken zur Faltenbeabstandung, eine höhere Formbeständigkeit. Grundsätzlich können härtbare Imprägnierungen, welche unter Wärmeeinwirkung eine Vernetzung ausbilden, oder nicht härtbare Imprägnierungen (NC: non curing), welche auch ohne Wärmeeinwirkung selbstvernetzend sind, verwendet werden. Geeignete Imprägnierungen sind beispielsweise Phenolharze, Acrylate oder Epoxidharze.

Im Gegensatz zur Trägerschicht können die Poren der Feinfaserschicht einen Porendurchmesser zwischen 30 und 40 µm aufweisen, wobei ebenfalls ca. 40 bis 80 % der Poren in diesem Bereich liegen. Durch die vergleichsweise sehr kleine Porengröße besitzt die Feinfaserschicht zwar eine geringe Rußaufnahmekapazität, jedoch einen vergleichsweise hohen Abscheidegrad. Die Fasern der Feinfaserlage können beispielsweise aus Polyamid (PA), aus Polyethylen (PE), Polyester oder aus Polypropylen (PP) ausgebildet sein, wobei selbstverständlich auch ummantelte oder gänzlich anders ausgebildete Fasern denkbar sind. Ein Faserdurchmesser der Fasern in der Feinfaserschicht liegt ca. zwischen 1,5 und 5 µm, insbesondere zwischen 1,9 und 3,4 µm, wobei ein durchschnittlicher Faserdurchmesser bei ca. 2,9 µm liegt. Das Flächengewicht der Feinfaserschicht liegt dabei erheblich unter demjenigen der Trägerschicht, wobei die Trägerschicht beispielsweise ein Flächengewicht von ca. 138 g/m² aufweisen kann, wogegen das Flächengewicht der Feinfaserschicht lediglich ca. 20 g/m² beträgt.

In der nachfolgenden Tabelle 1 sind die Rußaufnahmekapazität in Gramm je m² sowie der Abscheidegrad in Prozent sowohl des zusammengesetzten Filtermaterials als auch der einzelnen Schichten bei einer Beaufschlagung mit Ruß aus einer Öllampe bei einer Beladungsgeschwindigkeit von 17,7 cm/s und 30 mbar Differenzdruckanstieg aufgeführt. Dabei ist ersichtlich, dass in der Trägerschicht die Rußaufnahmekapazität mit 5 g/m² deutlich über der Rußaufnahmekapazität der Feinfaserschicht, beispielsweise des Meltblown, liegt, da bei diesem die Rußaufnahmekapazität lediglich bei 0,6 bis 0,7 g/m², das heißt ca. einem Zehntel liegt. Der Abscheidegrad hingegen ist bei der Feinfaserschicht im Vergleich zur Trägerschicht höher, wobei das als Gesamtverbund gesehene Filtermaterial, bestehend aus der Trägerschicht und der damit über den Verbindungsbereich verbundenen Feinfaserschicht eine deutlich gesteigerte Rußaufnahmekapazität sowie einen deutlich gesteigerten Abscheidegrad im Vergleich zu den einzelnen Schichten besitzt.

**Tab. 1: Filtrationsverhalten des erfindungsgemäßen Filtermaterials und dessen einzelner Schichten bei Beaufschlagung mit 17,7cm/s und Ruß aus Öllampe (Beladung bis +30mbar Differenzdruckanstieg)**

| **Medium** | **Rußaufnahmekapazität [g/m²]** | **Gravimetrische Abscheidung [%]** |
|---|---|---|
| Filtermaterial | **6,7** | **97** |
| Trägerschicht | 5,0 | 69 |
| Feinfaserschicht | 0,6-0,7 | 71 |

In der nachfolgenden Tabelle 2 sind nochmals spezifische Kennwerte, wie beispielsweise Porendurchmesser, Dicke und Flächengewicht sowohl der einzelnen Schichten, als auch des gesamten Filtermaterials aufgeführt, wobei diese selbstverständlich rein exemplarisch zu sehen sind.

**Tab. 2: Materialeigenschaften**

| **Eigenschaft** | **Trägerschicht** | **Feinfaserschicht** | **Filtermaterial** |
|---|---|---|---|
| Luftdurchlässigkeit [l/(m²s)] | 840 | 645 | 355 |
| Flächengewicht [g/m²] | 138 | 20 | 164 |
| größte Pore [µm] | 83 | 39 | 32 |
| viele Poren [µm] | 74 | 34 | 26 |
| Faserdurchmesser [µm] | - | 1,9 - 3,4 | - |
| Dicke [mm] (bei 0,5kPa) | 0,65 | 0,19 | 0,77 *) |

Zu der in der Tabelle 2 mit *) gekennzeichneten Dicke ist zu sagen, dass aufgrund des Materialeintrags in die benachbarte Schicht der Gesamtverbund (Filtermaterial) dünner ist, als die Summe der einzelnen Schichten.

Generell kann die Feinfaserschicht auch sogenannte Nanofasern aufweisen, die insbesondere aus beliebigen Kunststoffen, bevorzugt aus Thermoplasten, wie zum Beispiel Polyamid (PA) oder aus Polyurethan (PU) gebildet werden. Bei der Verwendung eines Polymervlieses für die Trägerschicht kann generell ein textiles Flächengebilde aus einzelnen Fasern geschaffen werden, die beispielsweise trocken oder nass gelegt sind. Vorzugsweise wird dabei ein sogenanntes Wirrlagenvlies eingesetzt, bei dem die einzelnen Fasern hinsichtlich ihrer Orientierung frei angeordnet sind. Die Trägerschicht kann selbstverständlich auch als sogenanntes Spunbond ausgebildet sein, worunter man allgemein ein Spinnvlies versteht, bei welchem beispielsweise ein Polymer in einem Extruder erhitzt und auf einen hohen Druck gebracht wird. Das Polymer wird anschließend in genauer Dosierung mittels Spinnpumpen durch eine Matrize, die sogenannten Spinndüsen, gepresst. Auf der anderen Seite tritt das Polymer als feiner Faden (Filament) aus der Düsenplatte in noch geschmolzener Form aus und wird anschließend durch einen Luftstrom abgekühlt. Auf einem sich daran anschließenden Förderband, das als Sieb ausgebildet ist, und bei welchem eine Absaugung unter dem Sieb angeordnet ist, werden die einzelnen Fäden fixiert und es entsteht ein sogenanntes Wirrlagenvlies, das anschließend noch verfestigt, beispielsweise gewalzt wird. Dabei werden üblicherweise beheizte Walzen (Kalander) verwendet oder aber ein Dampfstrom, wodurch ein zumindest bereichsweises Verschmelzen der einzelnen Filamentfasern und damit eine besonders gleichmäßige Verteilung des Flächengewichts und eine homogene Gestaltung der Trägerschicht erreicht werden können.

Der Verbindungsbereich kann durch zusätzliches Material, z.B. einen Kleber, Lösungsmittel oder eine Faserschicht, und/oder durch eine spezielle Behandlung der Schichten, z.B. durch Verpressen, Verschweißen oder Vernadeln, gebildet werden. Bei der Verwendung eines zusätzlichen Materials verbindet sich dieses sowohl mit der Trägerschicht, als auch mit der Feinfaserschicht. Hierbei kann das zusätzliche Material z.B. als Klebepartikel oder Klebefasern mit adhäsiven Eigenschaften ausgebildet sein. Bei anderen Ausgestaltungen ist das zusätzliche Material als zusätzliche Verbindungsfaserschicht ausgebildet, welche unter thermischer Einwirkung eine Verbindung mit der Trägerschicht und der Feinfaserschicht eingehen. Hierbei können die Fasern der Verbindungsfaserschicht aufgeschmolzen und mit Fasern der Trägerschicht und/oder der Feinfaserschicht verschweißt werden. Alternativ können die aufgeschmolzenen Fasern der Verbindungsfaserschicht auch einen mechanischen Verbund mit der Trägerschicht und/oder der Feinfaserschicht eingehen. Hierbei dringt die Schmelze der Verbindungsfasern z.B. in die Poren der Trägerschicht ein und bildet nach dem Erkalten die mechanische Verbindung. Bei der Verwendung eines Klebers verbinden die Klebepartikel bzw. Klebefasern die Trägerschicht mit der Feinfaserschicht. Die Ausgestaltung mit zusätzlichem Verbindungsmaterial ist vorteilhaft, da durch das Eindringen des Verbindungsmaterials in die Trägerschicht eine Reduzierung der Porengröße im Trägermaterial erfolgt und so die degressive Porengröße in Durchströmungsrichtung erreicht wird.

Bei der Verbindung der Trägerschicht mit der Feinfaserschicht mittels eines Lösungsmittels, werden Fasern und/oder Bereiche angelöst und miteinander verpresst, wodurch sich diese Fasern/Bereiche der Schichten miteinander verbinden. Bei einer Verbindung ohne zusätzliches Material verbindet sich die Trägerschicht direkt mit der Feinfaserschicht. Hierbei können Fasern oder Bestandteile der Feinfaserschicht in die Trägerschicht oder aus der Trägerschicht in die Feinfaserschicht eingetragen werden, um einen Verbund zu bilden. Dies kann durch einen Verbindungs-Arbeitsgang mit/ohne Wärmeeintrag erreicht werden. Durch den Material-Eintrag in die jeweils andere Schicht wird die Porosität in diesem Verbindungsbereich verändert. Im Verbindungsbereich wird die Porosität der Trägerschicht reduziert und/oder der Feinfaserschicht vergrößert. Somit wird ein kontinuierlicher degressiver Porenverlauf über das Filtermedium erreicht.

Weitere Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der folgenden Beschreibung näher erläutert.

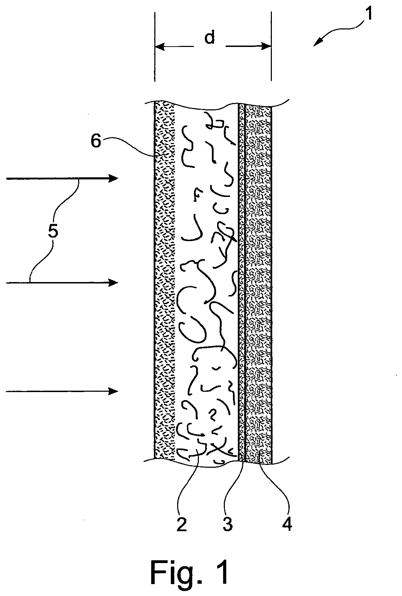

Die einzige Figur 1 zeigt eine Schnittdarstellung durch ein erfindungsgemäßes Filtermaterial.

Entsprechend der Figur 1, weist ein erfindungsgemäßes Filtermaterial 1 insgesamt zumindest zwei Schichten 2, 4 auf, nämlich eine Trägerschicht 2 und eine Feinfaserschicht 4. Diese beiden Schichten 2, 4 sind durch einen Verbindungsbereich 3 miteinander verbunden. Eine Durchströmungsrichtung durch das Filtermaterial 1 ist dabei mit Pfeilen 5 dargestellt. Anströmseitig der Trägerschicht 2 ist dabei eine Imprägnierung 6 angeordnet, auf die nachfolgend noch näher eingegangen wird.

Das erfindungsgemäße Filtermaterial 1 weist in Durchströmungsrichtung 5 eine degressive, das heißt kleiner werdende Porengröße auf, wobei anströmseitig die Trägerschicht 2 und abströmseitig die Feinfaserschicht 4 angeordnet sind. Die Feinfaserschicht 4 kann beispielsweise als sogenannte Meltblown-Lage ausgebildet sein. Eine gesamte Dicke d des Filtermaterials 1 beträgt dabei mehr als 0,35 mm, insbesondere mehr als 0,6 mm. Durch die in Durchströmungsrichtung 5 degressive Porengröße können die Vorteile der einzelnen Schichten 2, 4 miteinander kombiniert und somit ein Filtermaterial 1 mit gleichzeitig hoher Aufnahmekapazität und hohem Abscheidegrad erzielt werden. Die Trägerschicht 2 alleine weist eine vergleichsweise hohe Aufnahmekapazität (Rußaufnahmekapazität) auf, von beispielsweise 5,0 g/m², wogegen die Feinfaserschicht 4 lediglich eine Rußaufnahmekapazität von 0,6 bis 0,7 g/m² besitzt. Zusammen, das heißt im Verbund zum erfindungsgemäßen Filtermaterial 1 jedoch, kann eine Rußaufnahmekapazität von 6,7 g/m² erzielt werden, wie dies beispielsweise gemäß der Tabelle 1 dargestellt ist. Auch unterscheiden sich die individuellen Abscheidegrade zwischen Trägerschicht 2 und Feinfaserschicht 4, wobei der Abscheidegrad der Trägerschicht 2 beispielsweise 69 % und der Abscheidegrad der Feinfaserschicht 4 beispielsweise 71 % beträgt. Zusammen, das heißt im Verbund zum Filtermaterial 1 wiederum ergibt sich hieraus ein Gesamtabscheidegrad von 97 %.

Die Trägerschicht 2 kann beispielsweise Zellulose mit oder ohne Kunst-Faseranteil aufweisen, wobei ein Porendurchmesser zwischen 65 und 85 µm, insbesondere im Bereich von ca. 74 µm, liegt. Die Poren der Feinfaserschicht 4 hingegen weisen einen deutlich geringeren Porendurchmesser zwischen 30 und 40 µm auf. Jeweils 40 bis 80 % der Poren liegen dabei in den jeweiligen Porendurchmesserbereichen. Die Fasern der Feinfaserschicht 4 können beispielsweise aus Polyamid (PA), aus Polyethylen (PE), Polyester oder aus Polypropylen (PP) bestehen. Der Durchmesser der Fasern der Feinfaserschicht 4 liegt vorzugsweise zwischen 1,9 und 3,4 µm, insbesondere bei ca. 2,9 µm. Selbstverständlich kann nicht nur das gesamte Filtermaterial 1 in der Strömungsrichtung 5 eine degressive Porengröße aufweisen, sondern die einzelnen Schichten 2, 3, 4 jeweils selbst. Das heißt, dass beispielsweise auf der Anströmseite der Trägerschicht 2 eine größere Porengröße vorliegt als auf deren Abströmseite, das heißt im Bereich des Verbindungsbereiches 3. Die Poren des Verbindungsbereiches 3 weisen üblicherweise einen Porendurchmesser zwischen 30 und 45 µm auf, wobei der Verbindungsbereich 3 insbesondere als Klebeschicht ausgebildet sein kann. Hierbei kann der Kleber Klebepartikel oder Klebefasern aufweisen, die die Schichten 2, 4 miteinander verbinden. Bei anderen Ausgestaltungen kann der Verbindungsbereich ohne Materialauftrag gebildet sein. Hierzu kann der Verbindungsbereich durch eine Verschweißung der Trägerschicht 2 mit der Feinfaserschicht 4 gebildet sein. Bei weiteren Ausgestaltungen kann die Feinfaserschicht 4 auch auf die Trägerschicht 2 aufgewalzt sein.

Die Luftdurchlässigkeit der einzelnen Schichten beträgt bei der Trägerschicht 2 beispielsweise 840 l/(m²s) und bei der Feinfaserschicht 4 ca. 645 l/(m²s). Durch die Verbindung zum erfindungsgemäßen Filtermaterial 1 beträgt dessen Luftdurchlässigkeit nur noch ca. 355 l/(m²s).

Mittels des erfindungsgemäßen Filtermaterials 1 kann eine gleichmäßige Beladung desselben über die gesamte Tiefe erreicht werden, wobei insbesondere ein gleichzeitiges Befüllen der einzelnen Schichten und Bereiche 2, 3, 4 erreicht werden kann. Insbesondere kann dadurch eine Sättigung einer einzelnen Schicht bzw. Bereichs 2, 3, 4 vermieden werden, die die Gesamtfilterleistung erheblich reduzieren würde. Durch den Verbindungsbereich 3 wird zudem der Porengrößenverlauf harmonisiert, was bedeutet, dass beispielsweise durch Klebefasern bzw. Klebepartikel-Tröpfchen ein Porengrößenverlauf erzeugt wird, der einen allmählichen Verlauf der Porengröße von größer nach kleiner bewirkt. Innerhalb des Verbindungsbereiches 3 verläuft dabei die Porengröße ebenfalls vorzugsweise degressiv, das heißt anströmseitig beginnend mit einer Porengröße, die derjenigen der Trägerschicht 2 entspricht und abströmseitig mit einer Porengröße, die derjenigen der Feinfaserschicht 4 entspricht.

Die Trägerschicht 2 ist zudem schwer entflammbar. Ein Zellulosematerial für eine derartige Trägerschicht 2, das schwer entflammbar ist, besteht üblicherweise zu 25-27 Massen-%, aus einem Harz das zur Festigkeit, Steifigkeit, Formstabilität (insbesondere von eingeprägten Abstandshaltern/Nocken) sowie zum Schutz vor äußeren Einflussfaktoren (Feuchtigkeit, Nässe, Chemikalien wie Öl, Kraftstoff) beiträgt.

Insbesondere durch die erfindungsgemäße zumindest auf der Anströmseite der Trägerschicht 2 aufgebrachte einseitige Imprägnierung 6 kann ein Zuschmieren von sehr feinen Poren (auf der Abströmseite) und ein Schließen bzw. sich Verkleinern von feiner Poren durch eine Zwickelbildung des Harzes reduziert werden, so dass die Porenstruktur durch das Harz auf der Reinseite, das heißt der Abströmseite der Trägerschicht 2 gar nicht und auf der Anströmseite, das heißt auf der Rohseite nur marginal verändert wird. Erfindungsgemäß ist der Harzgehalt in der Trägerschicht 2 auf 22 Massen-% reduziert, was ebenfalls ein Zuschmieren von sehr feinen Poren, die insbesondere auf der Abströmseite eines Zellulosepapiers (Trägerschicht 2) liegen, reduziert.

Dies trägt in erheblichem Maße zu einer erfindungsgemäßen vorteilhaften degressiven Verteilung der Poren in Durchströmungsrichtung 5 unter Vermeidung von sprunghaften Porengrößenveränderungen bei. Darüber hinaus wird sowohl die Abscheideleistung als auch die Schmutzspeicherkapazität (insbesondere für die Beaufschlagung mit Rußpartikeln, die aufgrund ihrer Feinheit besonders tief in die Trägerschicht 2 bzw. generell in das Filtermaterial 1 eindringen) gesteigert. Auch eine gleichförmige Steigerung der Abscheideleistung in Durchströmungsrichtung 5 wird erzielt, was ebenfalls zu einer insgesamt erhöhten SchmutzSpeicherkapazität führt.

Das erfindungsgemäße Filtermaterial 1 kann insbesondere bei Luftfiltern von Brennkraftmaschinen in Automobilen eingesetzt werden, insbesondere auch für plissierte Filterelemente oder für gewickelte Einsätze mit wechselseitig verschlossenen Kanälen. Durch die Anordnung der einzelnen Schichten 2, 3, 4 mit degressivem Porendurchmesser kann ein insgesamt besonders leistungsfähiges Filtermaterial 1 geschaffen werden.

## Patentansprüche

1. Filtermaterial (1), insbesondere für einen Luftfilter einer Brennkraftmaschine, wobei
- das Filtermaterial (1) in Durchströmungsrichtung (5) eine degressive Porengröße aufweist,
- das Filtermaterial (1) eine anströmseitige Trägerschicht (2) und eine abströmseitige Feinfaserschicht (4), insbesondere eine Meltblown-Lage, aufweist,
**dadurch gekennzeichnet,**
- **dass** zwischen der Trägerschicht (2) und der Feinfaserschicht (4) ein Verbindungsbereich (3) angeordnet ist,
- **dass** das Filtermaterial (1) eine Dicke (d) von d > 0,35 mm aufweist,
- **dass** auf der Anströmseite der Trägerschicht (2) einseitig eine Imprägnierung (6) aufgebracht ist,
- **dass** die Trägerschicht (2) aus einem Zellulosematerial gebildet ist und die Imprägnierung (6) durch ein Harz gebildet ist,
- **dass** der Harzgehalt in der Trägerschicht (2) 22 Massen-% beträgt.

2. Filtermaterial nach Anspruch 1,
**dadurch gekennzeichnet,**
**dass** die Trägerschicht (2) Zellulose mit oder ohne Kunst-Faseranteil aufweist.

3. Filtermaterial nach Anspruch 1 oder 2,
**dadurch gekennzeichnet,**
**dass** Poren der Trägerschicht (2) einen Porendurchmesser zwischen 65 und 85 µm, insbesondere von ca. 74 µm aufweisen.

4. Filtermaterial nach einem der Ansprüche 1 bis 3,
**dadurch gekennzeichnet,**
**dass** Poren der Feinfaserschicht (4) einen Porendurchmesser zwischen 30 und 40 µm aufweisen.

5. Filtermaterial nach einem der Ansprüche 1 bis 4,
**dadurch gekennzeichnet,**
**dass** die Feinfaserschicht (4) Fasern aus Polyamid (PA), aus Polyethylen (PE), Polyester oder aus Polypropylen (PP) aufweist.

6. Filtermaterial nach einem der Ansprüche 1 bis 5,
**dadurch gekennzeichnet,**
**dass** die Feinfaserschicht (4) Fasern mit einem Durchmesser zwischen 1,5 und 5 µm, vorzugsweise 1,9 und 3,4 µm, insbesondere von ca. 2,9 µm aufweisen.

7. Filtermaterial nach einem der Ansprüche 1 bis 6,
**dadurch gekennzeichnet,**
**dass** die Trägerschicht (2) und/oder die Feinfaserschicht (4) und/oder der Verbindungsbereich (3) in Durchströmungsrichtung (5) eine degressive Porengröße aufweisen/aufweist.

8. Filtermaterial nach einem der Ansprüche 1 bis 7,
**dadurch gekennzeichnet,**
- **dass** Poren des Verbindungsbereiches (3) einen Porendurchmesser zwischen 30 und 35 µm aufweisen, und/oder
- **dass** der Verbindungsbereich (3) als Klebeschicht ausgebildet ist.

9. Filtermaterial nach einem der Ansprüche 1 bis 8,
**dadurch gekennzeichnet,**
- **dass** eine Luftdurchlässigkeit der Trägerschicht (2) ca. 840 l/m²s, beträgt, und/oder
- **dass** eine Luftdurchlässigkeit der Feinfaserschicht (4) ca. 645 l/m²s, beträgt, und/oder
- **dass** eine Luftdurchlässigkeit des Filtermaterials (1) ca. 355 l/m²s, beträgt.

10. Filtermaterial nach einem der Ansprüche 1 bis 9,
**dadurch gekennzeichnet,**
- **dass** die Imprägnierung (6) als eine unter Wärmeeinwirkung eine Vernetzung ausbildende härtbare Imprägnierung ausgebildet ist oder
- **dass** die Imprägnierung (6) als nicht härtbare Imprägnierung ausgebildet ist

11. Filtermaterial nach einem der Ansprüche 1 bis 10,
**dadurch gekennzeichnet,**
**dass** die Imprägnierung (6) Phenolharze, Acrylate oder Epoxidharze aufweist.

12. Filterelement mit einem Filtermaterial (1) nach einem der Ansprüche 1 bis 11, **dadurch gekennzeichnet,**
- **dass** das Filterelement als Wickelfilter mit wechselseitig verschlossenen Kanälen ausgebildet ist, oder
- **dass** das Filterelement als plissiertes, ringförmig geschlossenes oder flaches Filterelement ausgestaltet ist.

## Claims

1. A filter material (1), in particular for an air filter of an internal combustion engine, wherein
- the filter material (1) has a degressive pore size in flow direction (5),
- the filter material (1) comprises a substrate layer (2) on the upstream side and a fine-fibre layer (4), in particular a melt-blown layer, on the downstream side,
**characterized in that**
- a connection region (3) is arranged between the substrate layer (2) and the fine-fibre layer (4),
- the filter material (1) has a thickness (d) of d > 0.35 mm,
- an impregnation (6) is applied single-sidedly on the upstream side of the substrate layer (2),
- the substrate layer (2) is formed of a cellulose material and the impregnation (6) is formed of a resin,
- the resin content in the substrate layer (2) amounts to 22 mass-%.

2. The filter material according to Claim 1,
**characterized in that**
the substrate layer (2) comprises cellulose with or without synthetic fibre component.

3. The filter material according to Claim 1 or 2,
**characterized in that**
pores of the substrate layer (2) have a pore diameter between 65 and 85 µm, in particular of approximately 74 µm.

4. The filter material according to any one of the Claims 1 to 3,
**characterized in that**
pores of the fine-fibre layer (4) have a pore diameter between 30 and 40 µm.

5. The filter material according to any one of the Claims 1 to 4,
**characterized in that**
the fine-fibre layer (4) comprises fibres of polyamide (PA), of polyethylene (PE), polyester or of polypropylene (PP).

6. The filter material according to any one of the Claims 1 to 5,
**characterized in that**
the fine-fibre layer (4) comprises fibres with a diameter between 1.5 and 5 µm, in particular of approximately 2.9 µm.

7. The filter material according to any one of the Claims 1 to 6,
**characterized in that**
the substrate layer (2) and/or the fine-fibre layer (4) and/or the connecting region (3) in flow direction (5) have/has a degressive pore size.

8. The filter material according to any one of the Claims 1 to 7,
**characterized in that**
- pores of the connecting region (3) have a pore diameter between 30 and 35 µm, and/or
- the connection region (3) is formed as an adhesive layer.

9. The filter material according to any one of the Claims 1 to 8,
**characterized in that**
- an air permeability of the substrate layer (2) amounts to approximately 840 l/[m²s], and/or
- an air permeability of the fine-fibre layer (4) amounts to approximately 645 l/[m²s], and/or
- an air permeability of the filter material (1) amounts to approximately 355 l/[m²s].

10. The filter material according to any one of the Claims 1 to 9,
**characterized in that**
- the impregnation (6) is formed as a curing impregnation cross-linking under the effect of heat or
- the impregnation (6) is formed as a non-curing impregnation.

11. The filter material according to any one of the Claims 1 to 10,
**characterized in that**
the impregnation (6) comprises phenolic resins, acrylates or epoxy resins.

12. A filter element with a filter material (1) according to any one of claims 1 to 11,
**characterized in that**
- the filter element is formed as a wrapped filter with alternatingly closed channels, or
- the filter element is configured as a pleated, annularly closed or flat filter element.

## Revendications

1. Matériau filtrant (1), en particulier pour un filtre à air d'un moteur à combustion interne, dans lequel
- le matériau filtrant (1) présente dans une direction de circulation (5) une taille de pore dégressive,
- le matériau filtrant (1) présente une couche porteuse du côté entrant (2) et une couche de fibres fines du côté sortant (4), en particulier une couche soufflée en fusion, **caractérisé en ce que**,
- entre la couche porteuse (2) et la couche de fibres fines (4) est disposée une zone de liaison (3),
- le matériau filtrant (1) présente une épaisseur (d) de d > 0,35 mm,
- sur le côté entrant de la couche porteuse (2) est déposée unilatéralement une imprégnation (6),
- la couche porteuse (2) est formée d'un matériau de cellulose et l'imprégnation (6) est formée d'une résine,
- la teneur en résine dans la couche porteuse (2) est de 22 % en masse.

2. Matériau filtrant selon la revendication 1,
**caractérisé en ce que**,
la couche porteuse (2) présente de la cellulose avec ou sans proportion de fibres synthétiques.

3. Matériau selon la revendication 1 ou 2,
**caractérisé en ce que**,
des pores de la couche porteuse (2) présentent un diamètre de pore entre 65 et 85 µm, en particulier d'environ 74 µm.

4. Matériau filtrant selon l'une des revendications 1 à 3,
**caractérisé en ce que**,
des pores de la couche de fibres fines (4) présentent un diamètre de pore entre 30 et 40 µm.

5. Matériau filtrant selon l'une des revendications 1 à 4,
**caractérisé en ce que**,
la couche de fibres fines (4) présente des fibres de polyamide (PA), de polyéthylène (PE), de polyester ou de polypropylène (PP).

6. Matériau filtrant selon l'une des revendications 1 à 5,
**caractérisé en ce que**,
la couche de fibres fines (4) présente des fibres avec un diamètre entre 1,5 et 5 µm, de préférence entre 1,9 et 3,4 µm, en particulier d'environ 2,9 µm.

7. Matériau filtrant selon l'une des revendications 1 à 6,
**caractérisé en ce que**,
la couche porteuse (2) et/ou la couche de fibres fines (4) et/ou la zone de liaison (3) présente(nt) dans la direction de circulation (5) une taille de pore dégressive.

8. Matériau filtrant selon l'une des revendications 1 à 7,
**caractérisé en ce que**,
- des pores de la zone de liaison (3) présentent un diamètre de pore entre 30 et 35 µm, et/ou
- la zone de liaison (3) est conçue comme une couche adhésive.

9. Matériau filtrant selon l'une des revendications 1 à 8,
**caractérisé en ce que**,
- une perméabilité à l'air de la couche porteuse (2) est d'environ 840 l/m²s, et/ou
- une perméabilité à l'air de la couche de fibres fines (4) est d'environ 645 l/m²s, et/ou
- une perméabilité à l'air du matériau filtrant (1) est d'environ 355 l/M²s.

10. Matériau filtrant selon l'une des revendications 1 à 9,
**caractérisé en ce que**
- l'imprégnation (6) est conçue comme une imprégnation durcissable formant une réticulation sous l'effet de la chaleur ou
- l'imprégnation (6) est conçue comme une imprégnation non durcissable.

11. Matériau filtrant selon l'une des revendications 1 à 10,
**caractérisé en ce que**,
l'imprégnation (6) présente des résines phénoliques, des acrylates ou des résines époxy.

12. Elément filtrant comportant un matériau filtrant (1) selon l'une des revendications 1 à 11, **caractérisé en ce que**,
- l'élément filtrant est conçu comme un filtre en rouleau doté de canaux fermés alternativement, ou
- l'élément filtrant est conçu comme un élément filtrant plissé, fermé de façon annulaire ou plat.
